# EUROPÄISCHE PATENTANMELDUNG

(11) **EP 0 837 025 A1**
(43) Veröffentlichungstag der Anmeldung: **22.04.1998**
(21) Anmeldenummer: 96810699.7
(22) Anmeldetag: 21.10.1996
(51) Int. Cl.: B66B 11/08, F16G 1/28

(54) **Antriebssystem**

(71) Anmelder: INVENTIO AG, CH-6052 Hergiswil (CH)
(72) Erfinder: Spiess, Peter, Dipl. El.-Ing. ETH, 6045 Meggen (CH)

(57) **Zusammenfassung**

Bei diesem Antriebsystem für Seilaufzüge ist das Treiborgan anstelle der üblichen starren Seilscheibe als längsflexibler und quersteifer Treibgurt (2) mit Seilrillen ausgebildet. Dieser Treibgurt (2) wird von schmalen Scheibenrollen (3) getragen und geführt und mit einer Treibrolle (4) innenseitig direkt angetrieben. Die Treibrolle (4) ist ein Aussenläufermotor. Für eine schlupffreie Kraftübertragung sind der Treibgurt (2) und die Aussenfläche der Treibrolle (4) verzahnt.

## Beschreibung

Die vorliegende Erfindung betrifft ein Antriebsystem für Seilaufzüge umfassend ein Motor und ein vom Motor direkt oder indirekt angetriebenes Treiborgan, wobei das Treiborgan Seilrillen aufweist und von Tragseilen umschlungen ist, welche eine Kabine und ein Gegengewicht tragen und bewegen.

Bekannte Antriebe dieser Art weisen eine Seilscheibe oder Seiltrommel auf, welche beispielsweise über einen Riementrieb und/oder einen Reibantrieb mit dem Motor in direkter Wirkverbindung stehen.

Aus der deutschen Auslegeschrift Nr. 1 141 425 ist ein Reibradantrieb für Aufzüge mit einem Treibring bekannt. Bei diesem Reibradantrieb wird dessen Treibring durch eine aussenliegende Treibwelle angetrieben. Ein im Zentrum des Treibrings angeordneter Motor treibt seinerseits die Treibwelle über ein drehzahlreduzierendes Riemengetriebe an. Der Treibring liegt aussen mit einem Teil des Gewichtes von Kabine, Gegengewicht und Tragseilen auf der Treibwelle auf und ist an der Innenseite mit einer Stützrolle zusätzlich abgestützt und in seiner Lage gehalten. Mittels einer der Stützrolle diametral gegenüberliegenden Achse ist der Treibring ferner gegen das bei extremen Betriebsbedingungen ermöglichende Aufsteigen gesichert.

Bei dieser Art Reibradantriebe werden zwecks Erhöhung der Treibfähigkeit elastische Treibringauflagen benötigt, was im Stillstand örtliche Verformungen verursacht und dem Fahrkomfort abträglich sein kann. Das ermöglichende Aufsteigen des Treibringes, z.B. bei einem Notstop in Aufwärtsrichtung, stellt die Stabilität des Antriebes teilweise in Frage. Ferner ist der Abstand zwischen den abgehenden Seilen auf der Gegenwichts- und Kabinenseite, wie bei den üblichen Treibscheibenantrieben, allein vom Durchmesser des Treiborgans abhängig. Für einen grösseren Seilabstand muss zusätzlich eine Ablenkrolle vorgesehen werden.

Es ist deshalb die Aufgabe der vorliegenden Erfindung, ein Antriebsystem für einen Seilaufzug zu schaffen das die vorgehend genannten Nachteile nicht aufweist und das flexible Einsatzmöglichkeiten bietet.

Diese Aufgabe wird durch die im Anspruch 1 gekennzeichnete und in Zeichnungen und Beschreibungen dargestellte Erfindung gelöst.

Die Erfindung zeichnet sich u.a. dadurch aus, dass das Treiborgan keine starre Seilscheibe, sondern ein Treibgurt in der Form eines mit Seilrillen versehenen, längsbeweglichen und quersteifen Gurtkörpers ist, welcher an seiner Innenseite direkt von einer Treibrolle angetrieben wird.

Vorteilhafte Weiterbildungen und Verbesserungen sind in den Unteransprüchen aufgeführt.

Der Treibgurt weist als Verstärkung zugkraftaufnehmende Längseinlagen auf und für die nötige Quersteifigkeit sind in Querrichtung alternierend mit elastischen Füllern angeordnete steife Querelemente vorgesehen.

Zwecks schlupffreier Kraftübertragung weist der Treibgurt eine Innenverzahnung auf.

Der Treibgurt wird über zueinander distanzierte Gruppen von Scheibenrollen geführt, wobei eine Gruppe aus mindestens zwei Scheibenrollen besteht.

Die Gruppen von Scheibenrollen sind im Maschinenrahmen längsverschieblich angeordnet.

Die Gruppen von Scheibenrollen können zueinander um eine halbe Teilung versetzt sein, sodass diese einander überschneidend angeordnet werden können.

Die Treibrolle ist als Aussenläufermotor ausgeführt und steht in direkter Wirkverbindung mit der Innenseite des Treibgurtes.

Die Treibrolle kann auch über eine beliebige Transmissionsart vo einem ausserhalb des Treibgurtes angeordneten Motors angetrieben werden.

Zwecks schlupffreier Kraftübertragung ist die Treibrolle bzw. dessen Aussenfläche am Umfang über die ganze Länge verzahnt.

Die Treibrolle ist zwecks einstellbarer Spannung des Treibgurtes vertikal verschiebbar montiert.

Die Erfindung wird im folgenden anhand eines Ausführungsbeispiels näher erläutert und in den Zeichnungen dargestellt, es zeigen
- Fig.1: die Gesamtansicht des Antriebsystems,
- Fig.2: eine schematische Seitenansicht,
- Fig.3: den Aufbau des Treibgurtes,
- Fig.4: die Verzahnung von Treibrolle und Treibgurt,
- Fig.5: eine Seitenansicht bei überschneidenden Scheibenrollen,
- Fig.6: den Grundriss bei überschneidenden Scheibenrollen,
- Fig.7: die Anwendung des Gurtantriebes bei einem Aufzug in der Seitenansicht und
- Fig.8: die Anwendung des Gurtantriebes bei einem Aufzug im Grundriss.

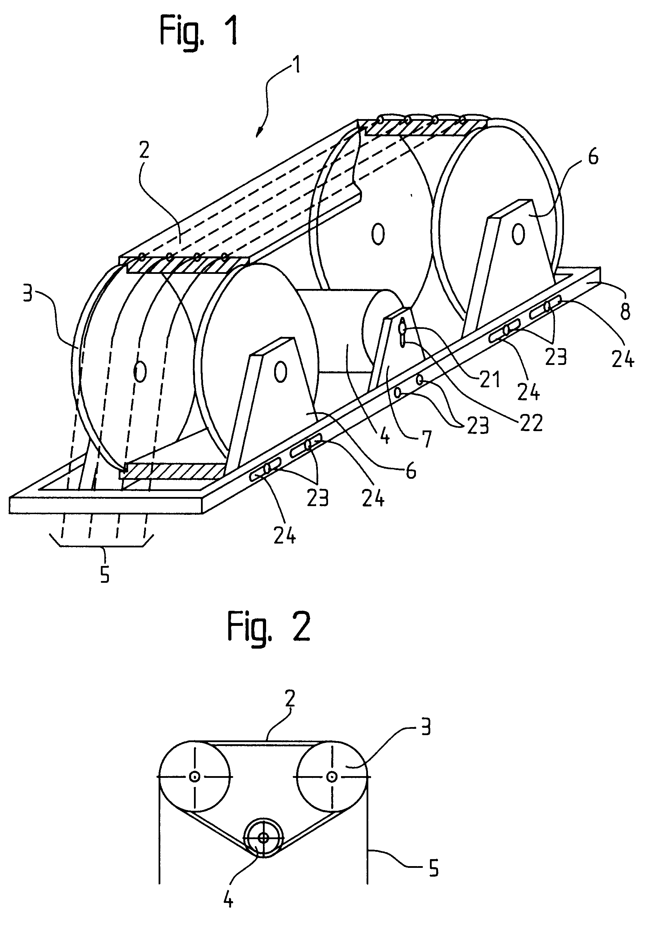

In der Fig.1 ist der Gurtantrieb als ganzes mit 1 bezeichnet. In einem Maschinenrahmen 8 sind auf jeder Seite zwei Rollenträger 6 mit Befestigungsmittel 23 in horizontalen Schlitzen 24 längsverschiebbar befestigt. Etwa in der Mitte des Maschinenrahmens 8 ist auf beiden Seiten ein Rollenträger 7 angeordnet und mit den Befestigungsmitteln 23 fixiert. Mit den Rollenträgern 7 wird eine Treibrolle 4 gehalten, deren stillstehende Achse 21 als Schraubgewinde fortgesetzt ist, über welches mittels normalen Schraubenmuttern in den Rollenträgern 7 fixiert werden kann. Die Rollenträger 7 weisen ein vertikales Langloch 22 auf, in welchem die Treibrolle 4 in einer für die Spannung des Treibgurtes 2 geeigneten vertikalen Höhe festgeschraubt werden kann. Die Rollenträger 6 tragen scheibenförmige Rollen, in der Folge Scheibenrollen 3 genannt. Im dargestellten Beispiel sind je zwei Scheibenrollen 3 auf einer gemeinsamen Achse angeordnet. Ueber die Scheibenrollen 3 und der Treibrolle 4 ist ein endloser Treibgurt 2 gelegt und durch die Lage von Treibrolle 4 und Scheibenrollen 3 straff gespannt. Der im Beispiel angedeutete Treibgurt 2 hat an seinen Rändern eine abgesetzte Profilform, durch welche der Treibgurt 2 zwischen den Scheibenrollen 3 in der Querrichtung geführt ist. Ebenfalls angedeutet sind Tragseile 5, welche über den Treibgurt 2 in Seilrillen geführt sind.

Die Fig. 2 zeigt in der Seitenansicht wie der endlose Treibgurt 2 die Scheibenrollen 3 und die Treibrolle 4 umschlingt.

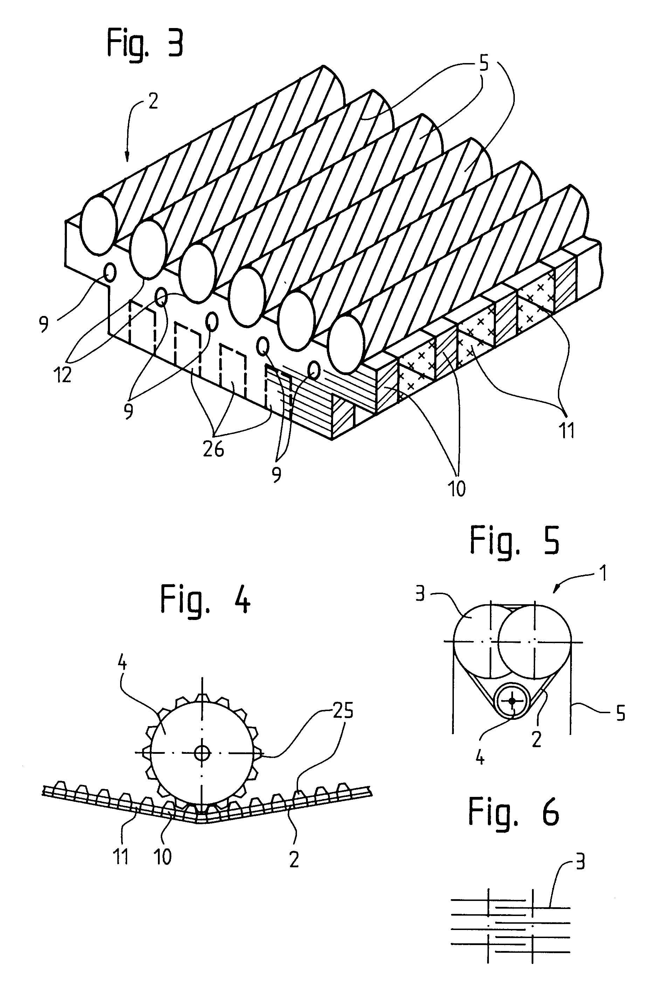

Die Einzelheiten des Treibgurtes 2 sind in der Fig.3 ersichtlich. Der dargestellte Querschnitt des Treibgurtes 2 ist für jenen Anwendungsfall vorgesehen, bei dem die Scheibenrollen 3 paarweise distanziert zueinander, also ohne gegenseitige Ueberschneidung, angeordnet sind. Der dargestellte Treibgurt 2 läuft deshalb mit den an den Randzonen an der Unterseite vorhandenen rechtwinkligen Ausnehmungen über die schmalen Aussenflächen der Scheibenrollen 3. In der aufgeschnittenen Stirnfläche des Treibgurtes 2 sind Seilrillen mit 12 bezeichnet und etwas unterhalb und zwischen diesen Seilrillen 12 sind Stirnflächen von Zugkräfte aufnehmenden Längseinlagen 9 erkennbar. Diese Längseinlagen 9 bestehen aus einem Material mit hoher Zugfestigkeit bei gleichzeitig genügend hoher Flexibilität. Als Material sind Stahldrähte, hochfeste Kunststoffe oder Carbonfasern verwendbar. Der untere Teil des Querschnittes des Treibgurtes 2 bleibt frei von Einlagen, damit bei Bedarf weitere Führungsrillen 26 für mehrere Scheibenrollen 3 vorgesehen werden können. Die auf diese Art entstehenden Zwischenstege sind mit 28 bezeichnet. In der Längsrichtung des Treibgurtes 2 sind alternierend steife Querelemente 10 und elastiche Füller 11 aneinander gereiht. Als Füller 11 wird ein elastischer und zäher Kunststoff, beispielsweise "Vollkolan", eingesetzt. In der Fig. 3 sind die Füller 11 transparent dargestellt. Bei der Fabrikation des Treibgurtes 2 wird dieser lagenweise mit Zwischenverklebungen aufgebaut. Das bedingt eine Schichtung, bzw. Lamellierung der Querelemente 10 und der Füller 11, damit nach einer gewissen Dicke die Längseinlagen 9 eingewickelt werden können. Damit eine, wie in Fig.4 dargestellt, Trapez- oder Rechteckverzahnung 25 entsteht, werden so viele Lagen des Füllers 11 wieder entfernt, bis der Betrag der erforderlichen Zahntiefe erreicht ist. Auf diese Art entsteht eine einfache Rechteckverzahnung. Für eine Trapezverzahnung 25 weisen die steifen Querelemente 10 entsprechende Anschrägungen auf.

Bei einem kleinen Seilabstand zwischen Kabine und Gegengewicht, müssen die Scheibenrollen 3 sehr nahe zueinander angeordnet werden. In einem solchen Fall werden die Scheibenrollen 3 einander überschneidend, wie in Fig.5 und 6 dargestellt, angeordnet und der Treibgurt 2 weist an seiner Innenseite die zusätzlichen Führungsrillen 26 auf. Es bleibt dann immer noch genügend Material an den verbleibenden Zwischenstegen 28 für die Bildung der Verzahnung.

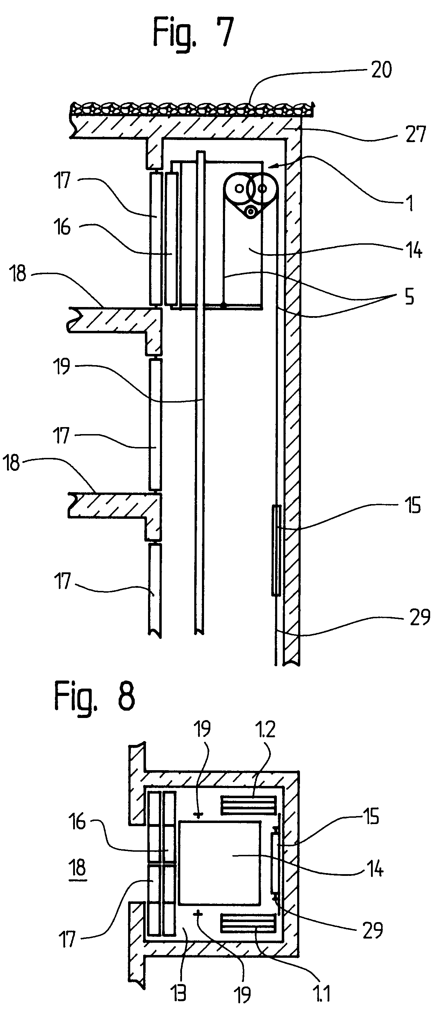

In den Fig.7 und 8 wird eine vorteilhafte Verwendung des Gurtantriebes 1 dargestellt. In einem Gebäude 27 mit Stockwerken 18 und einem Dach 20 ist in einem Schacht 13 ein Aufzug eingebaut. Dieser Aufzug weist im Schacht 13 oben seitlich je einen Gurtantrieb 1.1 und 1.2 auf. An den Tragseilen 5 ist eine in Führungen 19 laufende Kabine 14 und ein in Führungen 29 laufendes Gegengewicht 15 aufgehängt. Auf den Stockwerken 18 sind Stockwerktüren 17 und an der Kabine 14 Kabinentüren 16 angebracht.

Bei dieser Aufzugsdisposition werden durch die Aufteilung des Gurtantriebes 1 in zwei Einzelantriebe 1.1 und 1.2 pro Antrieb nur je zwei dünne Tragseile 5 benötigt, was eine sehr kleine Bautiefe des einzelnen Gurtantriebes 1 ergibt, sowie auch eine Leistungshalbierung pro Gurtantrieb 1. Diese Leistungshalbierung erfordert auch einen entsprechend kleinere Motorleistung. Der Wirkungsgrad einer beispielhaften Aufzugsanlage mit Gurtantrieb 1 ist relativ hoch, weil die unvermeidlichen Zwischenverluste einer Drehzahlreduktion über ein Getriebe entfallen.

Eine weitere Dispositionsmöglichkeit besteht darin, dass nur ein einziger Gurtantrieb 1 eingesetzt wird, der auf einer Seite oben im Schacht 13 angebracht wird. Die Tragseile 5 werden in diesem Fall mittels Seilrollen unter der Kabine 14 und am Gegengewicht 15 2:1 umgehängt. Dadurch ist eine höhere Seilgeschwindigkeit möglich und somit eine grösserer Uebersetzungsfaktor am Gurtantrieb 1. Letzteres begünstigt die Verwendung eines kleinen Motors mit hoher Drehzahl.

Unabhängig von der Art der Disposition, 1:1- oder 2:1-Aufhängung, ist der mit diesem Gurtantrieb 1 erzielbare Vorteil der Platzersparnis. Das heisst, dass kein separater Maschinenraum nötig ist, und dass so die Aufzugsanlage auch keinen Aufbau auf dem Dach 20 benötigt. Dank der heute kleineren Abmessungen der Steuer- und Regelektronik für Aufzüge kann diese an geeigneter Stelle irgendwo im Gebäude an einer Wand oder allenfalls ebenfalls im Schacht angebracht werden.

Die Treibrolle 4 wird vorzugsweise als Aussenläufermotor ausgebildet, wobei dessen Achse im Rollenträger 7 festgehalten wird. Ebenso kann die Treibrolle 4 nebst der Motorfunktion zusätzlich ein internes Reduktionsgetriebe beliebiger Art aufweisen.

Bei einer alternativen Ausführung ist vorgesehen, die Treibrolle 4 von einem nicht dargestellten, ausserhalb des Treibgurtes 2 angeordneten Motors über eine beliebige Transmission anzutreiben.

### Antriebsystem

### Bezugszeichenliste

- 1: Gurtantrieb
- 2: Treibgurt
- 3: Scheibenrolle
- 4: Treibrolle
- 5: Tragseile
- 6: Rollenträger
- 7: Rollenträger
- 8: Maschinenrahmen
- 9: Längseinlage
- 10: Querelement
- 11: elast. Füller
- 12: Seilrillen
- 13: Schacht
- 14: Kabine
- 15: Gegengewicht
- 16: Kabinentür
- 17: Stockwerktür
- 18: Stockwerk
- 19: Führungsschiene
- 20: Gebäudedach
- 21: Rollenachse
- 22: Langloch
- 23: Befestigungsmittel
- 24: Schlitzloch horizontal
- 25: Trapezverzahnung
- 26: Führungsrillen
- 27: Gebäude
- 28: Zwischensteg
- 29: Gegengewichtsführung

## Patentansprüche

1. Antriebsystem für Seilaufzüge umfassend ein Motor und ein vom Motor direkt oder indirekt angetriebenes Treiborgan, wobei das Treiborgan Seilrillen aufweist und von Tragseilen umschlungen ist, welche eine Kabine tragen und bewegen, dadurch gekennzeichnet, dass der Antrieb als Gurtantrieb (1) vorgesehen ist, welcher als Treiborgan einen, innenseitig direkt von einer Treibrolle (4) angetriebenen, in Längsrichtung biegsamen und quersteifen Treibgurt (2) aufweist.

2. Antriebsystem nach Anspruch 1, dadurch gekennzeichnet, dass der Treibgurt (2) als Verstärkung in Längsrichtung zugkraftaufnehmende Längseinlagen (9) aufweist und dass für die Quersteifigkeit alternierend in Längsrichtung mit elastischen Füllern (11) aneinander gereihte starre Querelementen (10) vorgesehen sind.

3. Antriebsystem nach Anspruch 1, dadurch gekennzeichnet, dass der Treibgurt (2) eine, eine schlupffreie Kraftübertragung ermöglichende, Innenverzahnung aufweist.

4. Antriebsystem nach Anspruch 1, dadurch gekennzeichnet, dass der Treibgurt (2) über zueinander distanzierte Gruppen von Scheibenrollen (3) gelegt und geführt ist, und dass eine Gruppe von Scheibenrollen (3) mindestens zwei Scheibenrollen (3) aufweist.

5. Antriebsystem nach Anspruch 1 oder 4, dadurch gekennzeichnet, dass die Gruppen von Scheibenrollen (3) in einem Maschinenrahmen (8) längsverschiebbar (23, 24) angeordnet sind.

6. Antriebsystem nach Anspruch 1 oder 4, dadurch gekennzeichnet, dass die Gruppen von Scheibenrollen (3) eine, eine Ueberschneidung ermöglichende, zueinander versetzte Anordnung aufweisen.

7. Antriebsystem nach Anspruch 1, dadurch gekennzeichnet, dass die in direkter Wirkverbindung mit dem Treibgurt (2) stehende Treibrolle (4) als Aussenläufermotor ausgebildet ist.

8. Antriebsystem nach Anspruch 1, dadurch gekennzeichnet, dass die Treibrolle (4) über eine Transmission oder ein Getriebe von einem ausserhab des Treibgurtes (2) angeordneten Motors angetrieben wird.

9. Antriebsystem nach Anspruch 1 oder 7, dadurch gekennzeichnet, dass die Aussenläuferoberfläche der Treibrolle (4) zwecks schlupffreier Kraftübertragung auf den Treibgurt (2) eine der Innenverzahnung des Treibgurtes (2) entsprechende Aussenverzahnung aufweist.

10. Antriebsystem nach einem der vorhergehenden Ansprüche, dadurch gekennzeichnet, dass die Treibrolle (4) zwecks einstellbarer Spannung des Treibgurtes (2) vertikal verschiebbar montiert ist.
